# EUROPEAN PATENT SPECIFICATION

(11) **EP 3 307 010 B1**
(45) Date of publication and mention of the grant of the patent: **11.12.2019**
(21) Application number: 16192457.6
(22) Date of filing: 05.10.2016
(51) Int. Cl.: H04L 29/06, H04W 36/00, H04W 76/16

(54) **METHOD FOR ESTABLISHING A COMMUNICATION AND INTERNET PROTOCOL MULTIMEDIA SUBSYSTEM**
VERFAHREN ZUR HERSTELLUNG EINER KOMMUNIKATION UND INTERNETPROTOKOLL-MULTIMEDIA-SUBSYSTEM
PROCÉDÉ D'ÉTABLISSEMENT UNE COMMUNICATION ET SOUS-SYSTÈME MULTIMÉDIA DE PROTOCOLE INTERNET

(43) Date of publication of application: 11.04.2018
(73) Proprietor: NTT DoCoMo, Inc., Tokyo 100-6150 (JP)
(72) Inventor: GUERZONI, Riccardo, 80687 Munich (DE); MUTIKAINEN, Jari, 80687 Munich (DE); KOSHIMIZU, Takashi, Chiyoda-ku, Tokyo 100-6150 (JP); ALI, Irfan, Palo Alto, CA 94306 (US)
(74) Representative: Viering, Jentschura & Partner mbB Patent- und Rechtsanwälte

(56) References cited:
- WO-A1-2010/115045
- WO-A1-2015/160329
- WO-A1-2016/014241
- "3rd Generation Partnership Project; Technical Specification Group Services and System Aspects; Circuit Switched (CS) fallback in Evolved Packet System (EPS); Stage 2 (Release 13)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.4.0, 22 June 2016 (2016-06-22), pages 1-103, XP051123506, [retrieved on 2016-06-22]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.0.2, 30 September 2016 (2016-09-30), pages 1-423, XP051172701, [retrieved on 2016-09-30]

## Description

The present disclosure relates to a method for establishing a communication and an Internet Protocol Multimedia Subsystem.

In the initial stage of its deployment there may be issues with supporting multimedia services over a NGS (Next Generation System) for mobile communication. A main issue may be a discontinuous NR (New RAN) coverage, so that frequent handovers would be needed during voice/video calls. In particular, if handover from NR to LTE (Long Term Evolution) is not supported, service continuity may not be supported.

Other possible issues may be related to transitory deployment situations due to, e.g. not supported or not sufficiently tested
- RRC (Radio Resource Control) signalling options or QoS (Quality of Service) requirements related to multimedia services or
- Next Generation NAS (Non-Access Stratum) signalling options (e.g. emergency calls) related to multimedia services.

Accordingly, approaches to provide a reliable support of multimedia services in context of a next generation system are desirable.

Document WO 2016/014241 A1 relates to telecommunication network components configured to manage a pre-establishment phase of a communication session of user equipment. The components may receive a session-failure indication and determine action data based on that. They may re-initiate the communication session via an access network indicated in the action data.

Document WO 2010/115045 A1 refers to fall back using mobile device assisted terminating access domain selection. A network entity forwards an invitation to a session to a mobile device. The mobile device replies with a rejection of the invitation and a request for the network entity to hold the session.

The invention is defined by independent claims 1 and 12. In the following, parts of the description and drawings referring to embodiments which are not covered by the claims are not presented as embodiments of the invention, but as examples useful for understanding the invention.

According to one embodiment, a method for establishing a communication as according to claim 1 is provided.

According to a further embodiment, an Internet Protocol Multimedia Subsystem as according to claim 12 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio cell arrangement including two communication networks.
- Figure 2: shows a communication system.
- Figure 3: shows a flow diagram illustrating an example of the initiation of a fallback for a mobile terminated call.
- Figure 4: illustrates an LTE fallback for a mobile-terminated call according to an embodiment.
- Figure 5: shows a flow diagram illustrating an example of the initiation of a fallback for a mobile terminated call.
- Figure 6: shows a flow diagram illustrating a fallback procedure with RRC redirection.
- Figure 7: shows a flow diagram illustrating another example of a fallback procedure with handover.
- Figure 8: shows a flow diagram illustrating a method for establishing a communication.
- Figure 9: shows a mobile radio communication network component 900 according to an example.

The following detailed description refers to the accompanying drawings that show, by way of illustration, specific details and aspects of this disclosure in which the invention may be practiced.

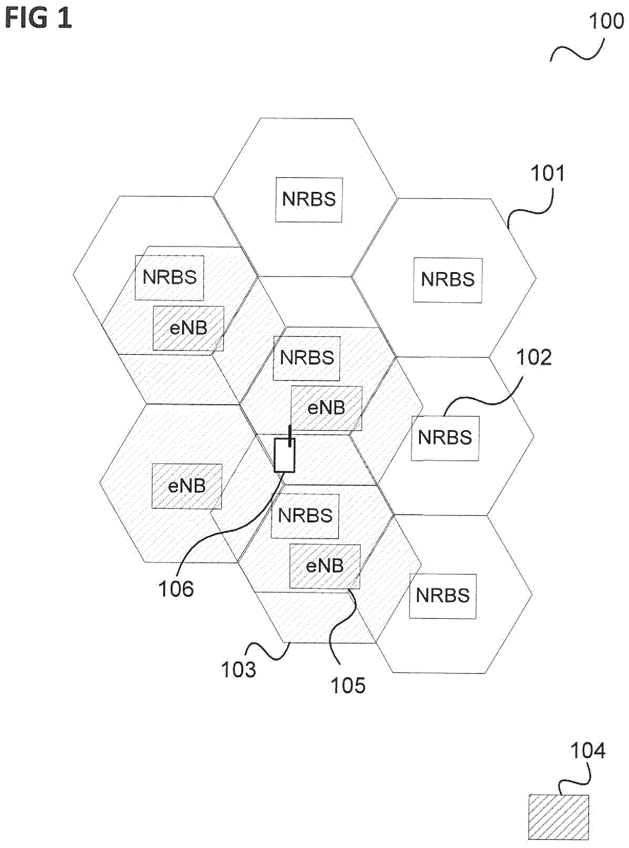

With multiple mobile communication systems being deployed in the same geographic region, a mobile terminal may be within the coverage area of more than one mobile communication networks which may operate according to the same RAT (radio access technology) or according to different RATs. This is illustrated in figure 1.

Figure 1 shows a radio cell arrangement 100 including two communication networks.

The radio cell arrangement 100 includes a first plurality of radio cells 101 (shown without hatching) operated by a plurality of first base stations 102 of a first communication network (e.g. next generation radio base stations NRBS), and a second plurality of radio cells 103 indicated by a hatching 104 operated by a plurality of second base stations 105 of a second communication network (e.g. of a different RAT, e.g. LTE base stations eNB).

As illustrated, the second plurality of radio cells 103 overlaps the first plurality of radio cells 101 such that a mobile terminal 106, located in the overlapping area may use both the first communication network and the second communication network, e.g. may both register with a base station 102 of the first communication network and a base station 105 of the second communication network. In particular, the mobile terminal 106 may use the second communication network (e.g. LTE) as a fallback from the first communication network (e.g. Next Generation System). This is referred to as LTE Fallback which an operator of a Next Generation System (NGS) can initially (e.g. in the initial phase of deployment) introduce to support multimedia services over LTE while the NGS is still the target to provide PS (Packet Switched) related services.

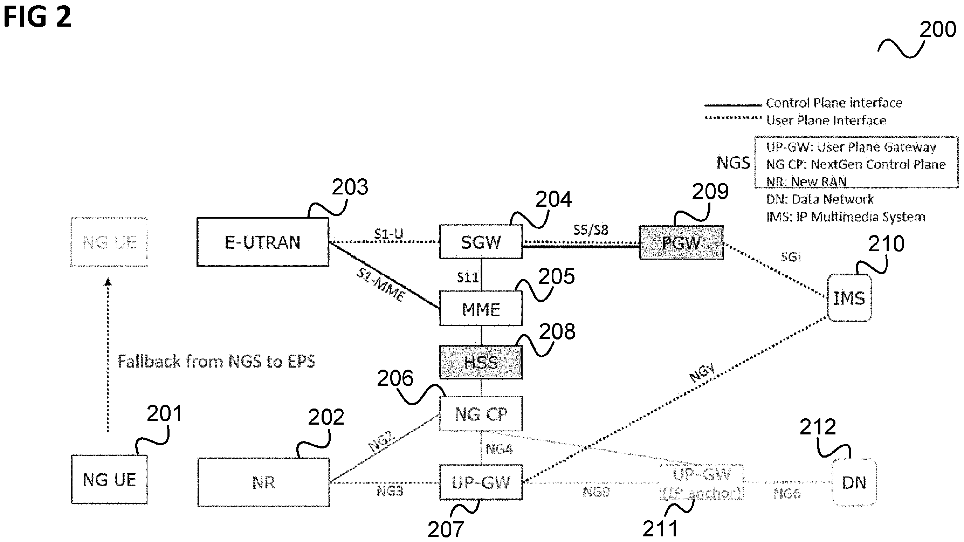

In the following, approaches are described how to fallback from NGS to EPS (Evolved Packet System, i.e. LTE communication system) for a UE that needs to perform a multimedia service. The architecture which is assumed in the following is, unless stated otherwise, as illustrated in figure 2.

Figure 2 shows a communication system 200.

The communication system 200 comprises a UE 201 which is in the coverage area of a Next Generation System radio access network 202, referred to as new radio (NR) 202, and an LTE radio access network (LTE RAN) 203, i.e. an E-UTRAN (Evolved UMTS Terrestrial Radio Access Network)-UTRAN 203.

The E-UTRAN 203 is connected to a Serving Gateway (SGW) 204 and to a Mobility Management Entity (MME) 205 which are also connected to each other.

The NR 202 is connected to a Next Generation Control Plane (NG CP) 206, i.e. to entities and components implementing a NG CP, and to a User Plane Gateway (UP-GW) 207.

The communication system 200 comprises a common Home Subscriber Server (HSS) 208 to which the MME 205 and the NG CP 206 are connected.

The communication system 200 further comprises a PGW 209 to which the SGW 204 is connected.

The PGW 209 is connected to an IMS 210. The UP-GW 207 is also connected to the IMS 210.

The NG CP 206 and the UP-GW 207 may further be connected to another UP-GW 211 which provides connection to a data network (DN) 212.

It is further assumed that there is a common network attach between EPS and NGS, i.e. a UE attached to one of the EPS and the NGS is also attached to the other.

The EPS and the NGS may or may not have a common IP anchor. The common IP anchor can be an EPC PGW, in this case the NGy interface between NGC and PGW is like EPC S5/S8 interfaces, a NGC UP-GW or a network element implementing the functions of both PGW and NGC UP-GW.

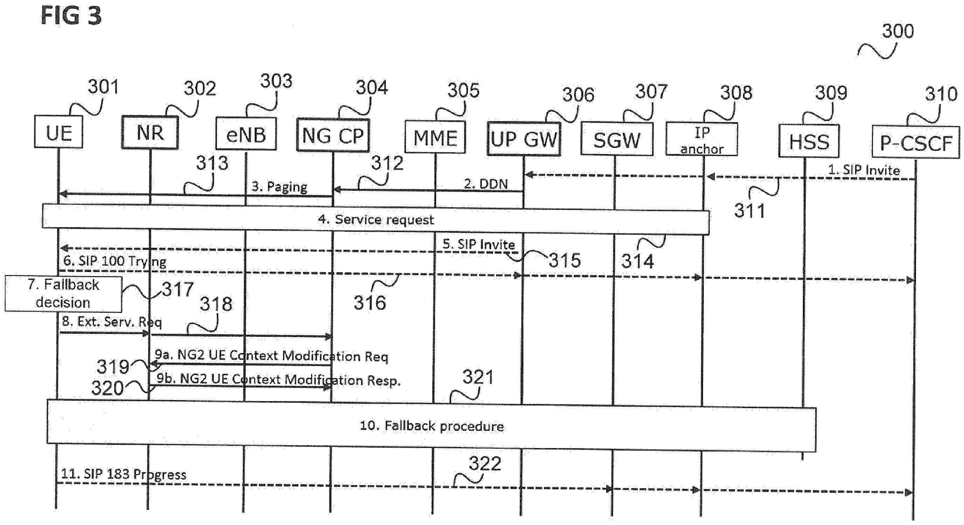

Figure 3 shows a flow diagram 300 illustrating an example of the initiation of a fallback for a Mobile Terminated call.

The flow takes place between a UE 301, for example corresponding to UE 201, a NR 302, for example corresponding to NR 202, an LTE eNB 303, which is for example part of E-UTRAN 203, an NG CP 304, for example corresponding to NG CP 206, an MME 305, for example corresponding to MME 205, an UP GW 306, for example corresponding to UP GW 207, an SGW 307, for example corresponding to SGW 204, a common IP anchor 308, an HSS 309, for example corresponding to HSS 208, and a P-CSCF 310, which is for example part of the IMS 210.

It is assumed as a pre-requisite that during the Attach procedure and Tracking Area Update procedures the NG CP indicated to the UE that:
- IMS_VOIP=False and VoLTE_FB=True
- IMS_VOIP=True and VoLTE_FB=True and the operator policy or UE pre-configuration requires that the UE performs the voice call on LTE/EPC.

In 311, the P-CSCF 310 sends a SIP Invite to the IP anchor 308 and the IP anchor 308 forwards it to the UP-GW 306 through the default bearer. The SIP Invite may originate from another UE which intends to establish a call with the UE 301.

In 312, the UP-GW 306 sends a Downlink Data Notification to the NG CP 304.

In 313, the NG CP 304 performs a paging of the UE 301.

In 314, the UE 301 performs a Service Request as a response to the paging.

In 315, the UE 301 receives the SIP Invite through the NGS network.

In 316, the UE 301 sends a SIP 100 Trying to the P-CSCF 310.

In 317, based on the value of the indicators IMS_VOIP and VoLTE_FB, the UE 301 performs the fallback decision.

In 318, the UE 501 sends an Extended Service Request for MO VoLTE fallback to the NG CP 504.

In 319, the NG CP 304 sends a NG2 UE Context Modification request (VoLTE Fallback indicator, TAI (Tracking Area Identity)) message to the NR 302. This message indicates to the NR 302 that the UE 301 should be moved to LTE.

In 320, the NR 502 sends a NG2 UE Context Modification response.

In 321, a fallback procedure is performed, e.g. based on a Handover or an RRC redirection as described further below.

In 322, the UE 301 sends a SIP 183 Progress message through the NGS.

In summary, in case of an incoming MT call, the UE 301 receives the SIP Invite via the common IP anchor 308 and the UP-GW 306 (in 311-715). After sending the SIP Trying, the UE 301 performs an Extended Service Request (in 308) and the NG CP 304 executes the fallback procedure to move the UE 301 to LTE/EPC. The UE 301 then sends a SIP 183 Progress via LTE/EPC.

This procedure involves a Service Request to exchange SIP signalling with the IMS or the other UE, respectively, followed by Extended Service Request to request the fallback.

The procedure described with reference to figure 3 requires a common IP anchor between the NGC and the EPC.

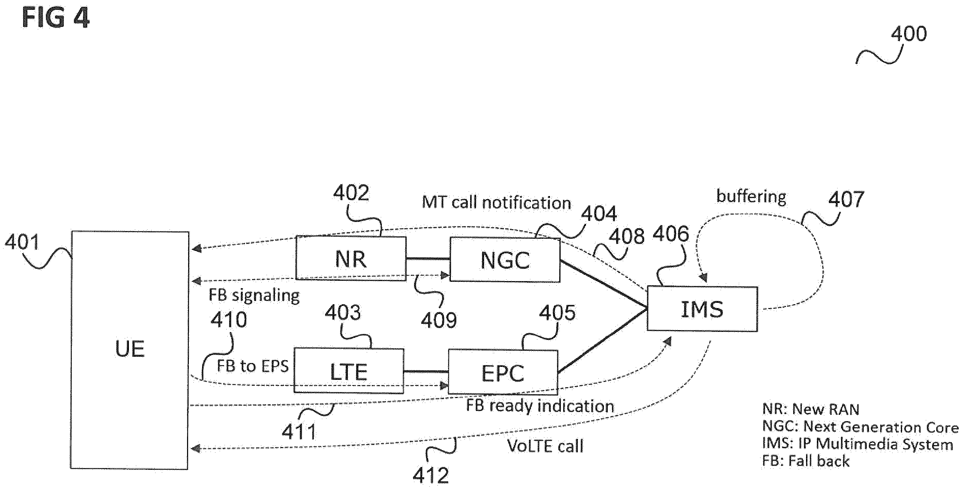

Figure 4 illustrates an LTE Fallback for a mobile-terminated call according to an embodiment.

A UE 401, e.g. corresponding to mobile terminal 201, is within the coverage area of a new radio (NR) 402, e.g. corresponding to NR 202, and an E-UTRAN 403, e.g. corresponding to E-UTRAN 403.

The NR 402 is connected to a Next Generation Core Network (NGC) 404 (e.g. including UP-GW 207 and NG CP 206) and the LTE RAN 403 is connected to an LTE core network (Evolved Packet Core, EPC) 405 (e.g. including SGW 204 and MME 205). The NGC 404 and the EPC 405 are both connected to an IP (Internet Protocol) Multimedia Subsystem (IMS) 406, e.g. corresponding to IMS 210.

The UE 401 is assumed to camp on the next generation system (NGS) and performs a fallback to the LTE communication system for a mobile terminated multimedia (e.g. VoLTE) call, for which the IMS 206 receives a call setup request directed to the UE 201, e.g. originating from another UE, as described in the following.

In 407, the IMS 406 buffers the call setup and notifies the UE 401 in 408 about an incoming call.

In 409, the UE 401 performs signalling with the NGS, which triggers fallback of the UE 401 to the EPS in 410. In 411, the UE 401 informs the IMS 406 that the UE 401 has switched to the EPS and is ready to receive the call.

In 412, the IMS 406 sends the buffered call setup request to the UE 401 and the call is established.

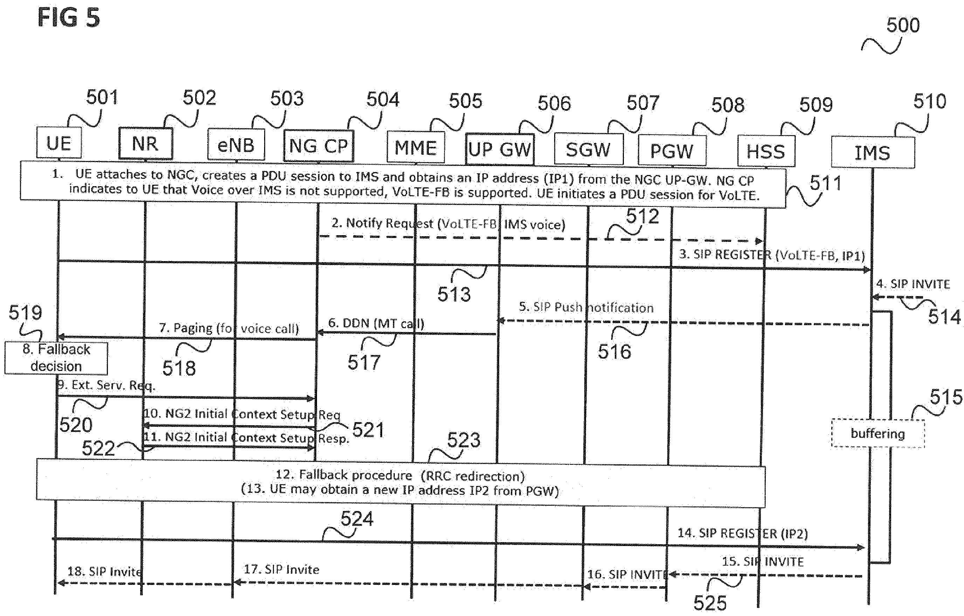

In the following, an example of the approach described with reference to figure 4 is described with reference to figure 5.

Figure 5 shows a flow diagram 500 illustrating an example of the initiation of a fallback for a mobile terminated call.

The flow takes place between a UE 501, for example corresponding to UE 201, a NR 502, for example corresponding to NR 202, an LTE eNB 503, which is for example part of E-UTRAN 203, an NG CP 504, for example corresponding to NG CP 206, an MME 505, for example corresponding to MME 205, an UP GW 506, for example corresponding to UP GW 207, an SGW 507, for example corresponding to SGW 204, an PGW 508, for example corresponding to PGW 209, an HSS 509, for example corresponding to HSS 208, and a P-CSCF 510, which is for example part of the IMS 210.

In 511, the UE 501 attaches to the NGC via 5G NR. The NGC may indicate in an Attach Accept message that the network supports VoLTE-FB procedures. The UE 501 initiates a PDU (Packet Data Unit) session for VoLTE services.

In 512, the NGC MM (Mobility Management) function of the NG CP 504 initiates a Notify Request to the HSS 509 as part of the attach procedure. The Notify Request procedure may include carrying a VoLTE-FB support indication to the HSS 509, e.g. in a similar manner as an IMS voice support indication according to 3GPP.

In 513, the UE 501 registers with the IMS 510 with a first IP address (from the NGC UP gateway 506). This procedure may include carrying the VoLTE-FB support indication to the IMS 510.

It is assumed that in 514, an incoming VoLTE call setup request (SIP INVITE) is received in the IMS 510. The IMS 510 performs a Terminating Access Domain Selection (T-ADS) according to 3GPP. As part of this procedure, the IMS 510 queries the HSS 509 and receives the IMS voice support indication and (if it was included in 512) the VoLTE-FB support indication. Based on the indications the IMS 510 knows the UE 501 resides in 5G NR access that does not support IMS voice but supports VoLTE-FB, therefore, in 515, the IMS 510 buffers the SIP INVITE.

In 516, the IMS 510 sends a call notification towards the UE 501. This notification may be encoded e.g. as a SIP MESSAGE method as specified in OMA (Open Mobile Alliance) SIP Push, but extended enhanced to carry the notification on the incoming call. Alternatively, this notification may be encoded as a regular SIP INVITE method. This notification may be (intentionally) lost in the network during the fallback.

In 517, the UP GW 506 sends a Downlink Data Notification (DDN) carrying an indication that the DDN is for an incoming VoLTE call.

In 518, the NG CP 504 pages the UE 501 wherein the paging carries an indication that the paging is for an incoming call.

In 519, the UE 501 receives the paging, determines the paging is for incoming VoLTE call, determines the current network does not support IMS voice but supports VoLTE-FB and decides to request a fallback to EPS.

Accordingly, in 520, the UE 501 sends and extended service request to the NG CP 504.

In 521, the NG CP 504 requests the 5G RAN 502 to transfer the UE to LTE.

In 522, the 5G RAN 502 accepts the request and transfers the UE 501 to LTE (e.g. by using RRC redirection).

In 523, the UE 501 is transferred to LTE. This may include that the UE 501 performs a Tracking Area Update procedure in LTE. As part of this procedure the user plane is activated.

If there is no common IP anchor between NGC and EPC, the UE 501 uses the PDN connection for VoLTE services that was earlier initiated in EPC during the EPS Attach procedure.

In this case, in 524, the UE 501 registers again with the IMS 510 with the IP address obtained from EPC PGW. The UE 501 informs the IMS 501 that it has transferred successfully to LTE. This can be indicated implicitly by the reception of IMS registration.

In 525, the IMS 510 sends the buffered SIP INVITE towards the UE 501 via the PGW 508, the SGW 507 and the LTE eNB 503.

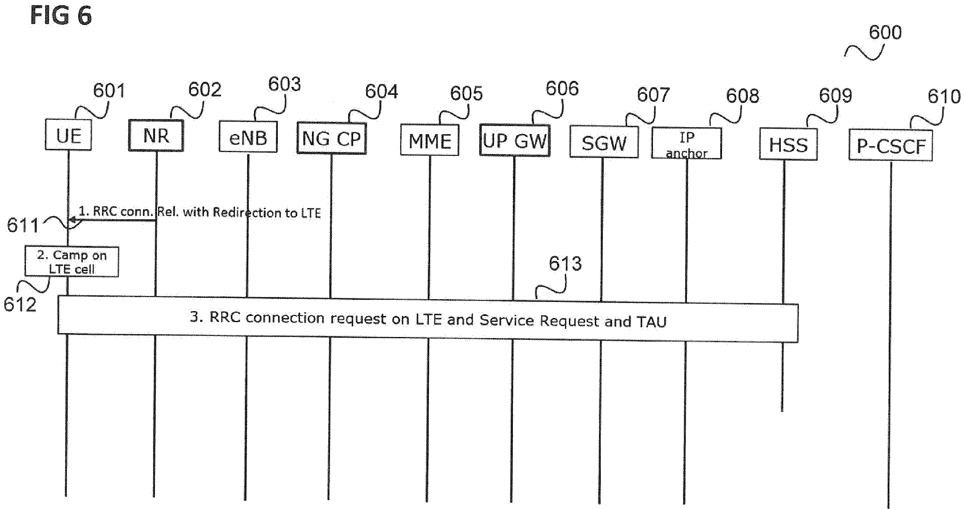

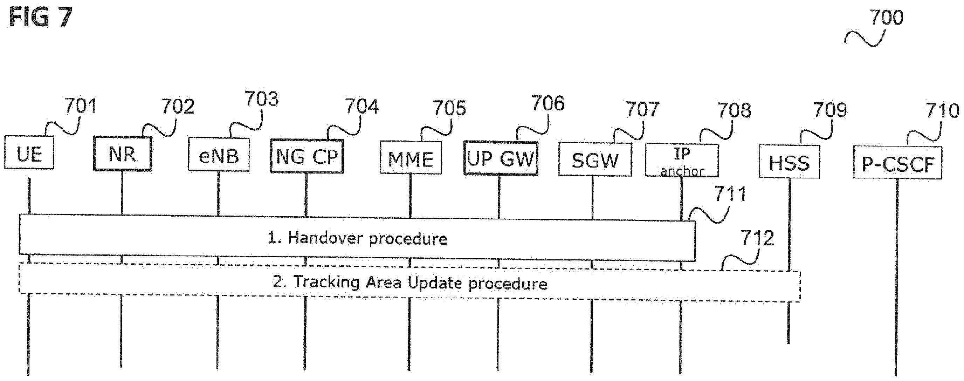

Examples for the fallback procedure of 523 are given in figures 6 and 7.

Figure 6 shows a flow diagram 600 illustrating a fallback procedure with RRC redirection.

The flow takes place between a UE 601, for example corresponding to UE 201, a NR 602, for example corresponding to NR 202, an LTE eNB 603, which is for example part of E-UTRAN 203, an NG CP 604, for example corresponding to NG CP 206, an MME 605, for example corresponding to MME 205, an UP GW 606, for example corresponding to UP GW 207, an SGW 607, for example corresponding to SGW 204, an IP anchor 608, an HSS 609, for example corresponding to HSS 208, and a P-CSCF 610, which is for example part of the IMS 210.

In 611, a redirection procedure (e.g. according to 3GPP) is performed. The UE context is not released.

In 612, the UE 601 camps on a LTE cell.

In 613, the UE 601 sends an RRC connection request on LTE and a Service Request. The UE 601 includes in the Service Request an indication that the SR is due to fallback. Further, a tracking area update (TAU) is performed.

Figure 7 shows a flow diagram 700 illustrating another example of a fallback procedure with handover.

The flow takes place between a UE 701, for example corresponding to UE 201, a NR 702, for example corresponding to NR 202, an LTE eNB 703, which is for example part of E-UTRAN 203, an NG CP 704, for example corresponding to NG CP 206, an MME 705, for example corresponding to MME 205, an UP GW 706, for example corresponding to UP GW 207, an SGW 707, for example corresponding to SGW 204, an IP anchor 708, an HSS 709, for example corresponding to HSS 208, and a P-CSCF 710, which is for example part of the IMS 210.

In 711, a handover procedure is carried out, e.g. similar to an S1 based Handover in EPC according to 3GPP, where the NG CP 1104 has the role of source MME and the CP part of the source SGW. The security context is moved from the source to target Control Plane function (MME) via an S10 interface which is provided in addition (with respect to the architecture shown in figure 2) between the MME 705 and the NG CP 704 to support the handover.

In 712, optionally, a Tracking Area Update with the EPC is carried out.

The procedures of figure 6 and 7 are only examples and the fallback procedure may also be implemented differently. In comparison with the example of figure 6, the example of figure 7 requires an interworking interface between MME and NG CP to support the handover between NGS and EPS.

After call clearing (MT or MO), after a SIP BYE message, the PDN session may be moved back to the NGS. This may for example involve the following:
- The MME 205 gets an indication from UE 201 that the Service Request is due to fallback of multimedia call
- The eNB (e.g. part of E-UTRAN 203) indicates a release of the S1 due to inactivity, the MME 205 reminds the eNB that the UE 201 must be redirected back to the NGS
- The MME 205 releases the S1 with redirect indication
- The eNB releases the RRC connection with redirection to 5G.

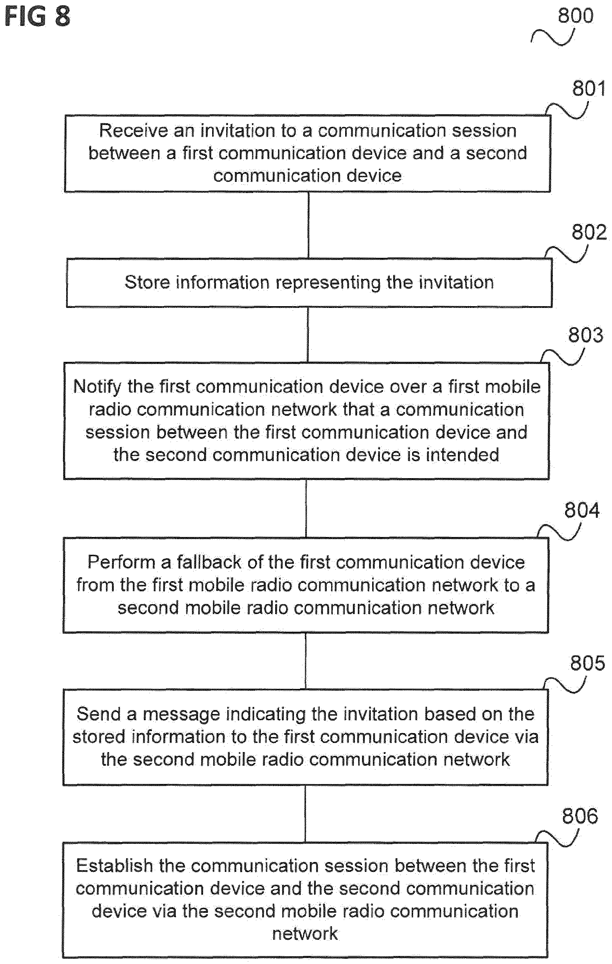

In summary, according to various embodiments, a method for establishing a communication is provided as illustrated in figure 8.

Figure 8 shows a flow diagram 800.

In 801, receiving an invitation to a communication session between a first communication device and a second communication device is received.

In 802, information representing the invitation is stored. In 803, the first communication device is notified over a first mobile radio communication network that a communication session is intended.

In 804, a fallback of the first communication device from the first mobile radio communication network to a second mobile radio communication network is performed.

In 805, a message is sent indicating the invitation based on the stored information to the first communication device via the second mobile radio communication network.

In 806, the communication session between the first communication device and the second communication device is established via the second mobile radio communication network.

According to the invention, in other words, an invitation to a communication session (e.g. a SIP invite) is buffered (or information representing the invitation, such as information that the invitation was received is stored) and a message indicating the invitation is sent (only) after a fallback of the communication device (e.g. a subscriber terminal) has been performed. The first communication device is notified that a communication session is intended (e.g. it may be paged) before the fallback but, according to the invention, the invitation is not sent to the first communication device. The first communication device is notified on a lower communication layer than the layer of the invitation (on a layer below application layer) . For example, the invitation may be sent according to a call control protocol but the sending of a call control protocol message (in context of the intended communication session) is delayed until after the fallback. In other words, the notification is performed in accordance with a different protocol (a lower-layer protocol) than the call control protocol. Thus, an end-to-end communication in accordance with the call control protocol (in relation to the communication session) is delayed until after the fallback, i.e. does only happen over the second mobile radio communication network.

The approach of figure 8 may for example be used to provide good quality multimedia services in a transitory situation of rollout of a Next Generation System. It may be implemented based on a loosely coupled architecture. In particular, the approach of figure 8 can be implemented without a common IP anchor between the first mobile radio communication network and the second mobile radio communication network.

It should be noted that one or more of the steps of the method illustrated in figure 8 may be carried out by a communication network component, i.e. a communication network component may be provided configured to carry out one or more of the steps of the method of figure 8, wherein according to the invention the steps are carried out by an IP multimedia system.

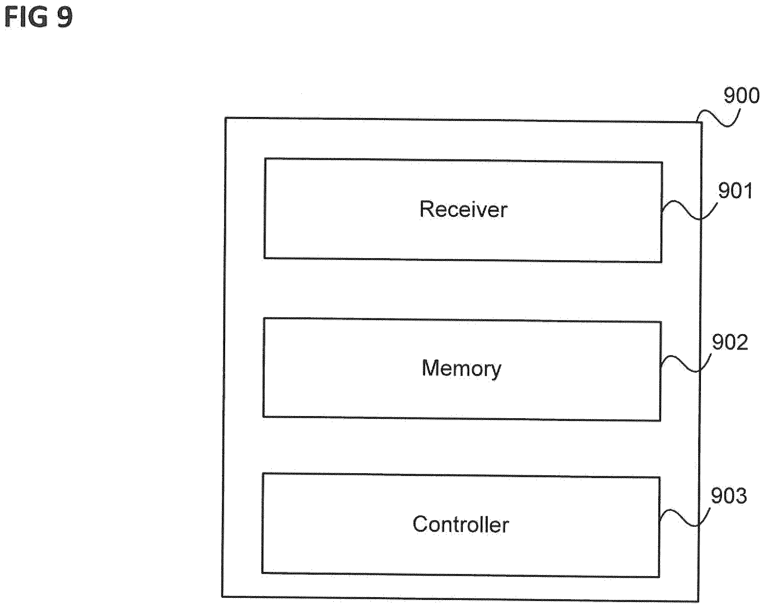

For example, the method illustrated in figure 8 is (at least in part) carried out by a mobile radio communication network component as illustrated in figure 9.

Figure 9 shows a mobile radio communication network component 900 according to an example.

The mobile radio communication network component 900 comprises a receiver 901 configured to receive an invitation to a communication session between a first communication device and a second communication device and a memory 902 configured to store information representing the invitation.

The mobile radio communication network component 900 further comprises a controller 903 configured to initiate a notification of the first communication device over a first mobile radio communication network that a communication session is intended and to initiate the sending of a message indicating the invitation based on the stored information to the first communication device via a second mobile radio communication network after a fallback of the first communication device from the first mobile radio communication network to the second mobile radio communication network.

The approaches described above may for example be used by a network operator to implement fallback strategies of multimedia services from NGS to EPS as a transitory solution during the deployment of a New RAN and NextGen Core network. This may allow providing good quality multimedia services in a transitory situation of rollout of the Next Generation System.

A fallback may for example be performed
- To avoid frequent handovers in case of discontinuous NR coverage
- Before and during the rollout of features to support multimedia calls on NGS

The approaches according to embodiments as described above may be implemented using a loosely coupled system.

Various examples are described below:
Example 1 is a method for establishing a communication as illustrated in figure 8.
Example 2 is the method according to Example 1, wherein the first mobile radio communication network is a 5G mobile radio communication network and the second mobile radio communication network is a Long Term Evolution radio communication network.
Example 3 is the method according to Example 1 or 2, wherein the message is a message according to a call control protocol.
Example 4 is the method according to Example 3, wherein the call control protocol is an application layer protocol.
Example 5 is the method according to any one of Examples 1 to 4, wherein the invitation originates from the second communication device.
Example 6 is the method according to any one of Examples 1 to 5, wherein the communication session is a multimedia call.
Example 7 is the method according to any one of Examples 1 to 6, wherein the communication session is an Internet Protocol Multimedia Subsystem communication session.
Example 8 is the method according to any one of Examples 1 to 7, comprising initiating the fallback by the first communication device.
Example 9 is the method according to Example 8, wherein the initiation of the fallback by the first communication device comprising sending an extended service request to the first mobile radio communication network.
Example 10 is the method according to any one of Examples 1 to 9, comprising the first communication device indicating that it supports a fallback to the second mobile radio communication network and comprising storing the information representing the invitation in reaction to the indication.
Example 11 is the method according to any one of Examples 1 to 10, comprising delaying forwarding of the invitation to the first communication device until after the fallback.
Example 12 is the method according to any one of Examples 1 to 11, wherein the invitation is received in the form of an invitation message and wherein the message indicating the invitation is the invitation message.
Example 13 is the method according to any one of Examples 1 to 12, wherein the fallback comprises changing a communication path between the first communication device and the second communication device from going via the first mobile radio communication network to going via the second mobile radio communication network.
Example 14 is the method according to any one of Examples 1 to 13, wherein the receiving, the storing and the sending is performed by an Internet Protocol multimedia system.
Example 15 is the method according to any one of Examples 1 to 14, wherein the notifying comprises a paging of the first communication device via the first mobile radio communication network.
Example 16 is the method according to Example 15, wherein the communication session is a call and the paging indicates that the first communication device is paged due to an incoming call.
Example 17 is a mobile radio communication network component as illustrated in figure 9.

According to a further example, a method to transmit a mobile terminated session request is provided comprising:
- an IP multimedia system receiving a session setup request destined to a user equipment
- Said IP multimedia system buffering said session setup request
- Said IP multimedia system sending a notification to a first mobile network with indication of incoming session request for said user equipment
- In said first mobile network, said user equipment sending a request to connect to a second mobile network
- Said first mobile network triggering the transfer of said user equipment to said second mobile network
- Said user equipment connecting to the second mobile network and sending an indication to the IP multimedia system indicating said user equipment has transferred to said second mobile network
- Said IP multimedia system sending said buffered session request to the user equipment via said second mobile network
- Said user equipment receiving the session request in said second mobile network.

The indicator indicating that said user equipment has transferred to said second mobile network may for example be transmitted according to a SIP REGISTER method

It should be noted that embodiments and examples described in context of one of the methods are analogously valid and applicable to the other methods as well as the mobile radio communication network component and vice versa.

The components of the mobile radio communication network component (e.g. the receiver and the controller) may for example be implemented by one or more circuits, A "circuit" may be understood as any kind of a logic implementing entity, which may be special purpose circuitry or a processor executing software stored in a memory, firmware, or any combination thereof. Thus a "circuit" may be a hardwired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

The scope of the invention is indicated by the appended claims.

## Claims

1. A method for establishing a communication comprising:
receiving, by an Internet Protocol Multimedia Subsystem (510), an invitation to a communication session between a first communication device (501) and a second communication device;
storing, by the Internet Protocol Multimedia Subsystem, information representing the invitation;
notifying, by the Internet Protocol Multimedia Subsystem, the first communication device over a first mobile radio communication network on a communication layer below application layer that a communication session is intended;
requesting a fallback by the first communication device;
performing the fallback of the first communication device from the first mobile radio communication network to a fallback second mobile radio communication network;
sending, only after the fallback and thus delayed until after the fallback, by the Internet Protocol Multimedia Subsystem, a message indicating the invitation based on the stored information to the first communication device via the fallback second mobile radio communication network on the application layer; and
establishing the communication session between the first communication device and the second communication device via the fallback second mobile radio communication network.

2. The method according to claim 1, wherein the first mobile radio communication network is a 5G mobile radio communication network and the fallback second mobile radio communication network is a Long Term Evolution radio communication network.

3. The method according to claim 1 or 2, wherein the message is a message according to a call control protocol.

4. The method according to claim 3, wherein the call control protocol is an application layer protocol.

5. The method according to any one of claims 1 to 4, wherein the invitation originates from the second communication device.

6. The method according to any one of claims 1 to 5, wherein the communication session is a multimedia call.

7. The method according to any one of claims 1 to 6, wherein the communication session is an Internet Protocol Multimedia Subsystem communication session.

8. The method according to claim 1, wherein the requesting of the fallback by the first communication device comprises sending an extended service request to the first mobile radio communication network.

9. The method according to any one of claims 1 to 8, comprising the first communication device indicating that it supports a fallback to the fallback second mobile radio communication network and comprising storing the information representing the invitation in reaction to the indication.

10. The method according to any one of claims 1 to 9, wherein the invitation is received in the form of an invitation message and wherein the message indicating the invitation is the invitation message.

11. The method according to any one of claims 1 to 10, wherein the fallback comprises changing a communication path between the first communication device and the second communication device from going via the first mobile radio communication network to going via the fallback second mobile radio communication network.

12. An Internet Protocol Multimedia Subsystem (510) comprising:
a receiver (901) configured to receive an invitation to a communication session between a first communication device (501) and a second communication device;
a memory (902) configured to store information representing the invitation; and
a controller (903) configured to:
initiate a notification of the first communication device over a first mobile radio communication network on a layer below application layer that a communication session is intended, wherein a fallback is requested by the first communication device; and
initiate the sending, only after the fallback and thus delayed until after the fallback, of a message indicating the invitation based on the stored information to the first communication device via a fallback second mobile radio communication network on the application layer after the fallback of the first communication device from the first mobile radio communication network to the fallback second mobile radio communication network.

## Patentansprüche

1. Verfahren zum Herstellen einer Kommunikation, aufweisend:
Empfangen einer Einladung zu einer Kommunikationssitzung zwischen einer ersten Kommunikationsvorrichtung (501) und einer zweiten Kommunikationsvorrichtung durch ein Internetprotokoll-Multimedia-Subsystem (510);
Speichern von Informationen, die die Einladung repräsentieren, durch das Internetprotokoll-Multimedia-Subsystem;
Benachrichtigen der ersten Kommunikationsvorrichtung über ein erstes Mobilfunkkommunikationsnetz auf einer Kommunikationsschicht unterhalb der Anwendungsschicht durch das Internetprotokoll-Multimedia-Subsystem, dass eine Kommunikationssitzung beabsichtigt ist;
Anfordern eines Rückfalls durch die erste Kommunikationsvorrichtung;
Durchführen des Rückfalls der ersten Kommunikationsvorrichtung von dem ersten Mobilfunkkommunikationsnetz zu einem zweiten Rückfall-Mobilfunkkommunikationsnetz;
Senden, erst nach dem Rückfall und damit verzögert auf nach dem Rückfall, einer Nachricht durch das Internetprotokoll-Multimedia-Subsystem, die die Einladung basierend auf den gespeicherten Informationen anzeigt, an die erste Kommunikationsvorrichtung über das zweite Rückfall-Mobilfunkkommunikationsnetz auf der Anwendungsschicht; und
Herstellen der Kommunikationssitzung zwischen der ersten Kommunikationsvorrichtung und der zweiten Kommunikationsvorrichtung über das zweite Rückfall-Mobilfunkkommunikationsnetz.

2. Verfahren nach Anspruch 1, wobei das erste Mobilfunkkommunikationsnetz ein 5G-Mobilfunkkommunikationsnetz und das zweite Rückfall-Mobilfunkkommunikationsnetz ein Long Term Evolution-Funkkommunikationsnetz ist.

3. Verfahren nach Anspruch 1 oder 2, wobei die Nachricht eine Nachricht gemäß einem Anrufsteuerungsprotokoll ist.

4. Verfahren nach Anspruch 3, wobei das Anrufsteuerungsprotokoll ein Anwendungsschichtprotokoll ist.

5. Verfahren nach einem der Ansprüche 1 bis 4, wobei die Einladung von der zweiten Kommunikationsvorrichtung ausgeht.

6. Verfahren nach einem der Ansprüche 1 bis 5, wobei die Kommunikationssitzung ein Multimedia-Anruf ist.

7. Verfahren nach einem der Ansprüche 1 bis 6, wobei die Kommunikationssitzung eine Internetprotokoll-Multimedia-Subsystem-Kommunikationssitzung ist.

8. Verfahren nach Anspruch 1, wobei das Anfordern des Rückfalls durch die erste Kommunikationsvorrichtung das Senden einer erweiterten Dienstanforderung an das erste Mobilfunkkommunikationsnetz aufweist.

9. Verfahren nach einem der Ansprüche 1 bis 8, aufweisend, dass die erste Kommunikationsvorrichtung angibt, dass sie einen Rückfall in das zweite Rückfall-Mobilfunkkommunikationsnetz unterstützt, und aufweisend das Speichern der Informationen, die die Einladung repräsentieren, als Reaktion auf die Angabe.

10. Verfahren nach einem der Ansprüche 1 bis 9, wobei die Einladung in Form einer Einladungsnachricht empfangen wird und wobei die die Einladung anzeigende Nachricht die Einladungsnachricht ist.

11. Verfahren nach einem der Ansprüche 1 bis 10, wobei der Rückfall das Ändern eines Kommunikationspfades zwischen der ersten Kommunikationsvorrichtung und der zweiten Kommunikationsvorrichtung vom Verlaufen über das erste Mobilfunkkommunikationsnetz zum Verlaufen über das zweite Rückfall-Mobilfunkkommunikationsnetz aufweist.

12. Internetprotokoll-Multimedia-Subsystem (510), aufweisend:
einen Empfänger (901), der eingerichtet ist, eine Einladung zu einer Kommunikationssitzung zwischen einer ersten Kommunikationsvorrichtung (501) und einer zweiten Kommunikationsvorrichtung zu empfangen;
einen Speicher (902), der eingerichtet ist, um Informationen zu speichern, die die Einladung repräsentieren; und
eine Steuerung (903), die eingerichtet ist:
eine Benachrichtigung der ersten Kommunikationsvorrichtung über ein erstes Mobilfunkkommunikationsnetz auf einer Schicht unterhalb der Anwendungsschicht einzuleiten, dass eine Kommunikationssitzung beabsichtigt ist, wobei ein Rückfall von der ersten Kommunikationsvorrichtung angefordert wird; und
Einleiten des Sendens, erst nach dem Rückfall und damit verzögert auf nach dem Rückfall,
einer Nachricht, die die Einladung basierend auf den gespeicherten Informationen anzeigt, an die erste Kommunikationsvorrichtung über ein zweites Rückfall-Mobilfunkkommunikationsnetz auf der Anwendungsschicht nach dem Zurückfallen der ersten Kommunikationsvorrichtung vom ersten Mobilfunkkommunikationsnetz zu dem zweiten Rückfall-Mobilfunkkommunikationsnetz.

## Revendications

1. Procédé d'établissement d'une communication comprenant les étapes ci-dessous consistant à :
recevoir, par le biais d'un sous-système multimédia de protocole Internet (510), une invitation à une session de communication entre un premier dispositif de communication (501) et un second dispositif de communication ;
stocker, par le biais du sous-système multimédia de protocole Internet, des informations représentant l'invitation ;
notifier, par le biais du sous-système multimédia de protocole Internet, le premier dispositif de communication sur un premier réseau de communication radio mobile sur une couche de communication sous la couche d'application, qu'une session de communication est prévue ;
demander un repli par le premier dispositif de communication ;
mettre en oeuvre le repli du premier dispositif de communication, du premier réseau de communication radio mobile vers un second réseau de communication radio mobile de repli ;
envoyer un message, uniquement après le repli, lequel est par conséquent retardé jusqu'à ce que le repli soit mis en oeuvre, par le biais du sous-système multimédia de protocole Internet, le message indiquant l'invitation sur la base des informations stockées, au premier dispositif de communication par l'intermédiaire du second réseau de communication radio mobile de repli sur la couche d'application ; et
établir la session de communication entre le premier dispositif de communication et le second dispositif de communication par l'intermédiaire du second réseau de communication radio mobile de repli.

2. Procédé selon la revendication 1, dans lequel le premier réseau de communication radio mobile est un réseau de communication radio mobile 5G et le second réseau de communication radio mobile de repli est un réseau de communication radio de technologie d'évolution à long terme.

3. Procédé selon la revendication 1 ou 2, dans lequel le message est un message selon un protocole de commande d'appel.

4. Procédé selon la revendication 3, dans lequel le protocole de commande d'appel est un protocole de couche d'application.

5. Procédé selon l'une quelconque des revendications 1 à 4, dans lequel l'invitation provient du second dispositif de communication.

6. Procédé selon l'une quelconque des revendications 1 à 5, dans lequel la session de communication est un appel multimédia.

7. Procédé selon l'une quelconque des revendications 1 à 6, dans lequel la session de communication est une session de communication de sous-système multimédia de protocole Internet.

8. Procédé selon la revendication 1, dans lequel l'étape de demande du repli par le premier dispositif de communication comprend l'étape consistant à envoyer une demande de service étendu au premier réseau de communication radio mobile.

9. Procédé selon l'une quelconque des revendications 1 à 8, comprenant l'étape dans laquelle le premier dispositif de communication indique qu'il prend en charge un repli vers le second réseau de communication radio mobile de repli, et comprenant l'étape consistant à stocker des informations représentant l'invitation en réaction à l'indication.

10. Procédé selon l'une quelconque des revendications 1 à 9, dans lequel l'invitation est reçue sous la forme d'un message d'invitation, et dans lequel le message indiquant l'invitation est le message d'invitation.

11. Procédé selon l'une quelconque des revendications 1 à 10, dans lequel l'étape de repli comprend l'étape consistant à modifier un chemin de communication entre le premier dispositif de communication et le second dispositif de communication, de sorte que le chemin qui passait auparavant par le premier réseau de communication radio mobile passe à présent par le second réseau de communication radio mobile de repli.

12. Sous-système multimédia de protocole Internet comprenant :
un récepteur (901) configuré de manière à recevoir une invitation à une session de communication entre un premier dispositif de communication (501) et un second dispositif de communication ;
une mémoire (902) configurée de manière à stocker des informations représentant l'invitation ; et
un contrôleur (903) configuré de manière à :
initier une notification, du premier dispositif de communication sur un premier réseau de communication radio mobile sur une couche située sous la couche d'application, qu'une session de communication est prévue, dans lequel un repli est demandé par le premier dispositif de communication ; et
initier l'envoi d'un message, uniquement après le repli et par conséquent retardé jusqu'à ce que le repli soit mis en oeuvre, indiquant l'invitation sur la base des informations stockées, au premier dispositif de communication, par l'intermédiaire du second réseau de communication radio mobile de repli, sur la couche d'application, après le repli du premier dispositif de communication, du premier réseau de communication radio mobile vers le second réseau de communication radio mobile de repli.
